# EUROPEAN PATENT APPLICATION

(11) **EP 4 769 615 A1**
(43) Date of publication of application: **01.07.2026**
(21) Application number: 24877646.0
(22) Date of filing: 11.10.2024
(51) Int. Cl.: H01M 10/0562, H01M 10/052, C01B 17/22

(54) **SULFIDE-BASED SOLID ELECTROLYTE, METHOD FOR PRODUCING SAME, AND ALL-SOLID-STATE BATTERY COMPRISING SAME**

(30) Priority: 12.10.2023 KR 20230136255
(71) Applicant: LG Chem, Ltd., Seoul 07336 (KR)
(72) Inventor: KIM, Ingyu, Daejeon 34122 (KR); KIM, Jinseck, Daejeon 34122 (KR); JEON, Doyeon, Daejeon 34122 (KR); CHUNG, Habin, Daejeon 34122 (KR); PARK, Changhun, Daejeon 34122 (KR); KIM, Jeongheon, Daejeon 34122 (KR)
(74) Representative: Plasseraud IP
(86) International application number: PCT/KR2024/096345
(87) International publication number: WO 2025/080111

(57) **Abstract**

The present disclosure discloses a sulfide-based solid electrolyte having micronized particles, a narrow particle size distribution and a uniform particle size so as to have improved battery properties, a method for manufacturing the same, and an all-solid-state battery including the same.

## Description

### [Technical Field]

### Cross citation with relation application(s)

The present disclosure claims priority to and? the benefit of Korean Patent Application No. 10-2023-0136255, filed in the Korean Intellectual Property Office on October 12, 2023, the disclosure of which is incorporated herein by reference in its entirety.

The present disclosure relates to a sulfide-based solid electrolyte having a sufficient level of ion conductivity by controlling particle size and particle size distribution, a method for manufacturing the same, and an all-solid-state battery including the same.

### [Background Art]

An all-solid-state battery is a battery in which a liquid electrolyte that fills a space between a positive electrode and a negative electrode of an existing lithium secondary battery is replaced by a solid electrolyte. The all-solid-state battery does not use flammable solvents in the battery, and therefore, is safe with no risk of explosion. In addition, the all-solid-state battery has higher energy density compared to existing batteries since Li metal or Li alloy may be used as a negative electrode material, and thus has received attention as a next-generation battery.

A core material forming a solid electrolyte includes polymers, sulfides, oxides and the like, but among these, a sulfide-based solid electrolyte having high softness and high ion conductivity is regarded as being suitable for manufacturing high-capacity large-sized batteries.

The most commonly used method for manufacturing an all-solid-state battery is a dry compression process in which a solid electrolyte is prepared in a powder form, and the powder is introduced to a prescribed molding machine and then pressed. However, since such a solid electrolyte is used in a powder form, it is difficult to form an interface with an electrode active material compared to a liquid electrolyte, and this causes a problem of reduced ion conductivity.

The problem of interface property between an electrode active material and a solid electrolyte may be improved by controlling a particle size of the solid electrolyte. In other words, when reducing a particle size of the solid electrolyte, the contact interface between the electrode active material and the solid electrolyte may be readily formed, and accordingly, ion conductivity may be improved as well.

As a method for micronizing the solid electrolyte, a dry grinding process is widely used. However, a dry grinding process has a limitation in controlling the particle size and has a wide particle size distribution, and thus it is difficult to sufficiently improve ion conductivity. In addition, the dry grinding process may cause a problem of increasing a thickness of the solid electrolyte layer as well. Particularly, since a sulfide-based solid electrolyte has soft properties, the micronized solid electrolyte is attached to a grinding medium (for example, ball) during dry grinding, causing a problem of reducing a recovery rate. A method of using a dispersant has also been proposed in order to overcome such problems, however, using a dispersant is not preferred since it may cause another problem of reducing ion conductivity.

### [DISCLOSURE]

### [Technical Problem]

Accordingly, the present disclosure is directed to providing a sulfide-based solid electrolyte maintaining high ion conductivity and having a controlled particle size, and a method for manufacturing the same.

### [Technical Solution]

One embodiment of the present disclosure provides a sulfide-based solid electrolyte including: a lithium (Li) element; and a sulfur (S) element, wherein, in a spectrum obtained by ¹H-NMR measurement performed on the solid electrolyte, at least one peak in a chemical shift range of 7.0 ppm or greater and 8.5 ppm or less and at least one peak in a chemical shift range of 3.5 ppm or greater and 4.5 ppm or less are observed.

One embodiment of the present disclosure provides a method for manufacturing a sulfide-based solid electrolyte, the method including: preparing a slurry by mixing sulfide-based solid electrolyte particles including a lithium (Li) element and a sulfur (S) element, and an aromatic organic solvent; and wet-grinding the slurry.

The aromatic organic solvent is at least one selected from the group consisting of an aromatic hydrocarbon substituted with three or more alkyl groups; an aromatic hydrocarbon substituted with one or more alkoxy groups; an aromatic ketone; an aromatic chlorinated hydrocarbon; an aromatic ester; and an aromatic acetate.

One embodiment of the present disclosure provides an all-solid-state battery including the sulfide-based solid electrolyte.

### [Advantageous Effects]

A sulfide-based solid electrolyte according to the present disclosure has micronized particles through a wet grinding process compared to an existing dry grinding process, and has advantages of narrow particle size distribution and uniform particle size. In addition, wet grinding is performed without using a separate dispersant and the like, thereby preventing a problem of a decrease in ion conductivity caused by using the dispersant.

In an all-solid-state battery including the micronized sulfide-based solid electrolyte according to the present disclosure, a contact interface is readily formed between an electrode active material and the solid electrolyte, and therefore, initial efficiency, lifetime properties and output properties of the battery are excellent.

### [Brief Description of Drawings]

FIG. 1 is a ¹H-NMR spectrum of a sulfide-based solid electrolyte of Example 1.
FIG. 2 is a diagram showing particle size distributions (PSD) of sulfide-based solid electrolyte particles of Example 1, Comparative Example 3 and Comparative Example 4.

### [Best Mode]

Hereinafter, a sulfide-based solid electrolyte according to a specific embodiment of the present disclosure, a method for manufacturing the same, and an application thereof will be described in more detail.

Unless otherwise defined in the present specification, all technical terms and scientific terms are used for describing illustrative embodiments only and are not intended to limit the present disclosure. Singular forms include plural forms as well, unless the context clearly indicates otherwise. In the present specification, a term such as "include (comprise)", "be provided with" or "have" is to specify the presence of features, numbers, steps, constituents or combinations thereof implemented, and needs to be construed as not excluding the possibility of presence or addition of one or more of other features, numbers, steps, constituents or combinations thereof in advance.

The present disclosure may have various modifications applied thereto, and may have various forms, and specific embodiments will be illustrated and described in detail below. However, this is not intended to limit the present disclosure to specific disclosed forms, and needs to be understood to include all modifications, equivalents and substitutes included in the idea and the technical scope.

A sulfide-based solid electrolyte of the present disclosure includes a material in a solid state having lithium ion conductivity. The sulfide-based solid electrolyte of the present disclosure preferably has sufficient lithium ion conductivity for an operation of a lithium battery at room temperature, that is, 25°C. A solid electrolyte mentioned in the present specification hereinafter means a sulfide-based solid electrolyte unless particularly mentioned otherwise.

The sulfide-based solid electrolyte of the present disclosure may include a lithium (Li) element and a sulfur (S) element, or may include a lithium (Li) element, a phosphorus (P) element and a sulfur (S) element. In addition, the sulfide-based solid electrolyte of the present disclosure may include a lithium (Li) element, a phosphorus (P) element, a sulfur (S) element and a halogen element, which is more preferred from the viewpoint of improving ion conductivity. Some of the elements may be substituted with other elements.

The sulfide-based solid electrolyte of the present disclosure is a solid electrolyte having an Argyrodite-type crystal structure that may be present in a solution state by being completely dissolved in a specific solvent. The solid electrolyte having an Argyrodite-type crystal structure may be, for example, LiₐP_{b}M_{c}S_{d}Xₑ (herein, M is at least one selected from Sb, Si, Ge, Sn, Pb, B, Al, As, Bi and Ga, X is at least one selected from Cl, Br, I and F, and 5≤a≤7.5, 1<b≤5, 0≤c≤5, 1≤d≤12 and 0≤e≤2).

The sulfide-based solid electrolyte according to one embodiment of the present disclosure may have, in a spectrum obtained by ¹H-NMR measurement, at least one peak observed in a chemical shift range of 7.0 ppm or greater and 8.5 ppm or less, and at least one peak observed in a chemical shift range of 3.5 ppm or greater and 4.5 ppm or less.

More preferably, at least one peak may be observed in a chemical shift range of 7.0 ppm or greater and 8.0 ppm or less and at least one peak may be observed in a chemical shift range of 3.5 ppm or greater and 4.0 ppm or less, and even more preferably, at least one peak may be observed in a chemical shift range of 7.0 ppm or greater and 7.5 ppm or less and at least one peak may be observed in a chemical shift range of 3.5 ppm or greater and 4.2 ppm or less.

The sulfide-based solid electrolyte having at least one, preferably two peaks observed in a range, as above has high ion conductivity, and an all-solid-state battery obtained using the same has improved cyclic properties.

The sulfide-based solid electrolyte according to one embodiment of the present disclosure has high ion conductivity of 6.5 mS/cm or greater, 7.0 mS/cm or greater, 7.5 mS/cm or greater or 8.0 mS/cm or greater at room temperature (25°C).

As for a method for measuring the ion conductivity, for example, sulfide-based solid electrolyte particles in a powder form are introduced to a stainless mold and compressed to be prepared into a pellet shape, then the pellet is heat treated for 12 hours at about 1250°C using an electric furnace to prepare a sintered body, and gold is deposited above and below the sintered body using a hard mask at 100W under the argon atmosphere to complete a cell, and then the ion conductivity at 25°C may be measured from a response obtained by applying an alternating current with two blocking electrodes using an impedance analyzer (Zahner, IM6).

A sulfide-based solid electrolyte is known to have excellent ion conductivity originally, readily form a favorable contact state with an electrode active material at room temperature compared to oxides, and have an ability to reduce interface resistance. The sulfide-based solid electrolyte of the present disclosure has a narrow particle size distribution, and has a particle size at a micron level, and therefore, a contact interface is readily formed between the electrode active material and the solid electrolyte, and as a result, excellent ion conductivity may be secured.

The sulfide-based solid electrolyte according to one embodiment of the present disclosure may have an average particle size in a range of 1 µm to 10 µm, 1 µm to 5 µm, 2 µm to 5 µm or 3 µm to 5 µm as a volume cumulative particle size (D50).

When the average particle size is less than the above-mentioned range, agglomeration may occur between the particles, lowering ion conductivity, and when the average particle size is greater than the above-mentioned range, binding properties between the particles become poor due to the excessive particle size of the sulfide-based solid electrolyte particles, resulting in the presence of pores. As a result, ion conductivity of the solid electrolyte particles may be reduced, significantly reducing lifetime properties, and a thickness of the solid electrolyte layer may also increase.

The sulfide-based solid electrolyte according to one embodiment of the present disclosure has a narrow particle size distribution, and the degree of particle size distribution calculated from (D90-D10)/D50 has a value of 3 or less. A low value of less than the above-mentioned numerical range may cause a bimodal particle size distribution, and a high value means that excessively large or fine powder is included.

More preferably, the value calculated from (D90-D10)/D50 may be 2.2 or greater and 2.5 or less. When the value calculated from (D90-D10)/D50 satisfies the above-mentioned range, the sulfide-based solid electrolyte may have more superior ion conductivity, moisture resistance, filling rate and the like.

As for the particle size and the particle size distribution according to the present disclosure, each of a cumulative 10% particle size, a median size and a cumulative 90% particle size expressed as D10, D50 and D90 in the cumulative distribution of the powder is identified in the volume particle size distribution. D50 is referred to as a median particle size, and represents a particle size value corresponding to the cumulative distribution percentage reaching 50%. The value calculated from the calculation formula (D90-D10)/D50 is defined as the particle size distribution, and a smaller value means having a narrow particle size distribution. The particle size and the particle size distribution may be measured using a laser diffraction scattering-type particle size distribution measurement method.

The sulfide-based solid electrolyte having a uniform particle size at a micro level and a narrow particle size distribution as in the present disclosure has high fluidity, and therefore, is readily compressed when forming a solid electrolyte layer, increasing an opportunity for contact between the particles and reducing a gap between the particles. Accordingly, the solid electrolyte layer may have a reduced thickness, and may also have improved ion conductivity.

The sulfide-based solid electrolyte according to one embodiment of the present disclosure has a BET specific surface area of 6.0 m²/g or less, 5.0 m²/g or less or 4.0 m²/g or less, and 1.0 m²/g or greater, 2.0 m²/g or greater or 3.0 m²/g or greater. Specifically, the sulfide-based solid electrolyte has a BET specific surface area in a range of 1.0 m²/g to 6.0 m²/g, preferably in a range of 2.0 m²/g to 5.0 m²/g, and more preferably in a range of 3.0 m²/g to 4.0 m²/g.

The specific surface area of the sulfide-based solid electrolyte particles may be measured using a BET (Brunauer-Emmett-Teller) method. For example, the specific surface area may be measured using a BET 6-point method by a nitrogen gas adsorption flow method using a porosimetry analyzer (Bell Japan Inc, Belsorp-II mini).

The solid electrolyte preferably has a small specific surface area. Particles having a large specific surface area form a solid electrolyte layer with large pores, thereby reducing an opportunity for contact between the solid electrolyte particles, and between the electrode active material and the solid electrolyte. In addition, a large specific surface area means that unevenness is required on a particle surface or a surface is irregular. Accordingly, when having a small specific surface area, particles have small particle size and high fluidity, and this may increase binding properties between the solid electrolyte particles and increase ion conductivity. However, when the specific surface area is too small, a particle size larger than necessary may be formed, increasing porosity and thereby declining battery performance. Accordingly, satisfying the above-mentioned range may be preferred.

One embodiment of the present disclosure may provide a method for manufacturing a sulfide-based solid electrolyte, the method including: preparing a slurry by mixing sulfide-based solid electrolyte particles including a lithium (Li) element and a sulfur (S) element, and an aromatic organic solvent; and wet-grinding the slurry.

The manufacture of a sulfide-based solid electrolyte using wet grinding according to the present disclosure is performed through steps of preparing sulfide-based solid electrolyte particles (S1); wet grinding (S2); and drying (S3).

### Preparing Sulfide-Based Solid Electrolyte Particles (S1)

Sulfide-based solid electrolyte particles may be prepared into an amorphous or crystalline solid electrolyte through various methods using a raw material including a lithium (Li) element and a sulfur (S) element. The raw material may further include compounds including a phosphorus (P) element and a halogen element.

The compound containing lithium (Li), which is one of the raw materials, may include, for example, lithium compounds such as lithium sulfide (Li₂S), lithium oxide (Li₂O) and lithium carbonate (Li₂CO₃), or lithium metal.

The compound containing sulfur (S) may include lithium sulfide or phosphorus sulfide.

In addition, the compound containing phosphorus (P) may include, for example, phosphorus sulfides such as diphosphorus trisulfide (P₂S₃) and diphosphorus pentasulfide (P₂S₅), phosphorus compounds such as sodium phosphorus (Na₃PO₄), phosphorus and the like.

In addition, the compound containing a halogen element may include LiF, LiCl, LiBr, LiI, BCl₃, BBr₃, BI₃, AlF₃, AlBr₃, AlI₃, AlCl₃, SiF₄, SiCl₄, SiCl₃, Si₂Cl₆, SiBr₄, SiBrCl₃, SiBr₂Cl₂, SiI₄, PF₃, PF₅, PCl₃, PCl₅, POCl₃, PBr₃, POBr₃, PI₃, P₂Cl₄, P₂I₄, SF₂, SF₄, SF₆, S₂F₁₀, SCl₂, S₂Cl₂, S₂Br₂, GeF₄, GeCl₄, GeBr₄, GeI₄, GeF₂, GeCl₂, GeBr₂, GeI₂, AsF₃, AsCl₃, AsBr₃, AsI₃, AsF₅, SnF₄, SnCl₄, SnBr₄, SnI₄, SnF₂, SnCl₂, SnBr₂, SnI₂, SbF₃, SbCl₃, SbBr₃, SbI₃, SbF₅, SbCl₅, PbF₄, PbCl₄, PbF₂, PbCl₂, PbBr₂, PbI₂, BiF₃, BiCl₃, BiBr₃, BiI₃, GaCl₂, GaCl₃, Ga₂Cl₄, GaCl₅, GaBr₃, GaI₃, GaF₃ and the like. The compound containing a halogen element is preferably LiCl, LiBr, LiI, PCl₅, PCl₃, PBr₅ or PBr₃, and more preferably LiCl, LiBr, LiI or PBr₃.

The content ratio between the lithium-containing compound, the phosphorus-containing compound, the sulfur-containing compound and the halogen-containing compound may be diversely adjusted depending on the forming molar ratio of the finally manufactured sulfide-based solid electrolyte, and is not particularly limited in the present disclosure.

For example, an Argyrodite-type sulfide-based solid electrolyte is manufactured by preparing an amorphous sulfide-based solid electrolyte through a mechanical milling method, a solution method, a melting-rapid cooling method or the like, and then heating treating the sulfide-based solid electrolyte. Herein, the heat treatment is performed under an inert gas atmosphere such as argon (Ar) or nitrogen (N₂). Herein, the pressure is not particularly limited, and the heat treatment may be performed under a normal pressure condition. Specific manufacturing methods are not limited in the present disclosure, and known methods may be used.

### Wet Grinding (S2)

The properties of the sulfide-based solid electrolyte described above may be controlled through grinding of the solid electrolyte particles, and particularly, the controlling may be achieved through wet grinding using an organic solvent during the grinding.

In the present disclosure, the sulfide-based solid electrolyte particles have a narrow particle size distribution, a uniform particle size at a micron level and a low specific surface area through a wet grinding process, and as a result, a sulfide-based solid electrolyte having high ion conductivity may be obtained.

The solvent used in the wet grinding of the present disclosure is an aromatic organic solvent.

The properties of the solid electrolyte, that is, the properties such as ion conductivity, particle size, particle size distribution and specific surface area may vary depending on the properties of the solvent used in the wet grinding, and therefore, selection of the solvent used during the wet grinding is very important.

The aromatic organic solvent usable in the present disclosure is at least one selected from the group consisting of an aromatic hydrocarbon substituted with three or more alkyl groups; an aromatic hydrocarbon substituted with one or more alkoxy groups; an aromatic ketone; an aromatic chlorinated hydrocarbon; an aromatic ester; and an aromatic acetate.

The alkyl group that may substitute the aromatic hydrocarbon is methyl or ethyl, and is preferably a methyl group. Specifically, trimethylbenzene (1,2,3-, 1,2,4- and 1,3,5-), tetramethylbenzene and the like substituted with three or more alkyl groups (for example, methyl) may be used. The aromatic hydrocarbon substituted with one or more alkoxy groups may include anisole, methyl anisole (2,3,4-), dimethyl anisole (2,3-, 2,4-, 2,5-, 2,6-, 3,4- and 3,5-), dimethoxybenzene and the like. The aromatic ketone may include acetophenone, propiophenone, dimethoxybenzene and the like. The aromatic chlorinated hydrocarbon may include 1,2,3-trichlorobenzene and the like. The aromatic ester may include methyl benzoate, ethyl benzoate, butyl benzoate and the like. The aromatic acetate may include benzyl acetate and the like.

As the aromatic organic solvent, those having a boiling point of 150°C or higher and 250°C or lower are preferably used. For example, the preferred aromatic organic solvent may be at least one selected from the group consisting of 1,2,4-trimethylbenzene (bp: 169°C), anisole (bp: 153.8°C), dimethoxybenzene (bp: 212.6°C), 1,2,3-trichlorobenzene (bp: 218°C), ethyl benzoate (bp: 212°C) and benzyl acetate (bp: 214°C). Among these, anisole, dimethoxybenzene, ethyl benzoate and benzyl acetate having polarity are preferred, and among these, anisole having low harmfulness is most preferred.

In addition, when using organic solvents having polarity, dispersion is facilitated compared to solvents, so there is also an advantage in that the sulfide-based solid electrolyte of the present disclosure is readily manufactured.

However, toluene and xylene are non-polar, and dispersion is not facilitated compared to the solvents presented above.

In the sulfide-based solid electrolyte of the present disclosure, the chemical shift of 7.0 ppm or greater and 8.5 ppm or less in the spectrum obtained by ¹H-NMR measurement is due to the aromatic organic solvent, and the chemical shift of 3.5 ppm or greater and 4.5 ppm or less is due to the polarity of the aromatic organic solvent.

The solid content concentration in the slurry for the wet grinding according to the present disclosure is preferably in a range of 2% by weight to 40% by weight, and more preferably in a range of 5% by weight to 20% by weight.

Having the slurry concentration less than the above-mentioned range is not preferred since grinding efficiency becomes worse, and having the slurry concentration greater than the above-mentioned range is not preferred since fluidity becomes worse, reducing impact force by the ball.

The method of wet grinding according to the present disclosure is not particularly limited as long as the purpose of the present disclosure is achieved, and, for example, includes methods such as media-type grinding such as a bead mill and a planetary ball mill, jet grinding and cavitation grinding. Among these, a planetary ball mill is preferred. Herein, the grinding condition is set so that the solid electrolyte before micronization is ground to have a desired particle size.

The material of the ball used for the grinding is not particularly limited as long as it is a material that does not react with the sulfide solid electrolyte, and examples thereof may include an alumina ball, a zirconia ball, a stainless ball, a silicon nitride ball, a tungsten carbide ball and the like. The grinding is performed for 5 minutes to 2 hours since activated carbon having target particle diameter and surface area is not obtained when the time of grinding is too long or too short. Herein, the grinding is performed at least once, and preferably 2 to 4 times. According to one embodiment, the grinding is performed 2 to 4 times for 5 minutes to 20 minutes each. In addition, the number of rotation is preferably 50 rpm to 500 rpm, and more preferably 200 rpm to 300 rpm.

### Drying (S3)

After performing the wet grinding described above on the sulfide-based solid electrolyte particles, the aromatic-based organic solvent is removed through a drying process.

The drying process in the present disclosure is for removing the aromatic-based organic solvent, and the temperature and the time are not particularly limited. The drying temperature may be lower than the crystallization temperature of the solid electrolyte. The drying process may be performed by hot air drying or reduced pressure drying. For example, performing reduced pressure drying of drying in a temperature range of 50°C to 200°C under reduced pressure is preferred.

When necessary, a solid-liquid separation process such as filtration, centrifugation, pressurized filtration or depressurized filtration may be further performed prior to the drying in order to separate the solid electrolyte particles and the organic solvent.

Even after the drying process, some of the aromatic-based organic solvent used during the wet grinding remains in the sulfide-based solid electrolyte. This residual organic solvent may increase fluidity of the solid electrolyte. The presence of the residual organic solvent may be identified through ¹H-NMR measurement on the final sulfide-based solid electrolyte particles. The sulfide-based solid electrolyte according to the present disclosure has at least one peak observed in a chemical shift of 7.0 ppm or greater and 8.5 ppm or less, and additionally at least one peak observed in a chemical shift of 3.5 ppm or greater and 4.5 ppm or less.

The content of the organic solvent remaining in the sulfide-based solid electrolyte may be in a range of 0.01% by weight or greater, 0.03% by weight or greater, 0.05% by weight or greater or 0.07% by weight or greater, and 10% by weight or less, 7.0% by weight or less, 5.0% by weight or less or 3.0% by weight or less in the whole electrolyte.

One embodiment of the present disclosure provides an all-solid-state battery including the sulfide-based solid electrolyte.

Specifically, the all-solid-state battery includes: a positive electrode including a positive electrode active material; a negative electrode including a negative electrode active material; and a solid electrolyte layer disposed between the positive electrode and the negative electrode and including the sulfide-based solid electrolyte according to the present disclosure.

The all-solid-state battery of the present disclosure may be manufactured using common methods known in the art. For example, the all-solid-state battery of the present disclosure may be manufactured by laminating the positive electrode, the negative electrode and the solid electrolyte layer so that the solid electrolyte layer is present between the positive electrode and the negative electrode, and pressurizing the laminate. Herein, the solid electrolyte layer may be adjusted to have various thicknesses by considering performance and controlling various process variables of the all-solid-state battery, and the solid electrolyte layer may preferably have a thickness of 1 mm to 10 mm and more preferably have a thickness of 3 mm to 4 mm.

In the present disclosure, the positive electrode includes a positive electrode current collector, and a positive electrode active material layer formed on the positive electrode current collector.

The positive electrode active material layer includes a positive electrode active material, a binder and a conductor. The positive electrode may be prepared by coating a slurry for a positive electrode including a positive electrode active material, a binder, a conductor, a solvent and the like on the positive electrode current collector.

The positive electrode current collector is not particularly limited as long as it has conductivity without inducing chemical changes to the corresponding battery, and for example, stainless steel, aluminum, nickel, titanium, baked carbon, or aluminum or stainless steel of which surface is treated with carbon, nickel, titanium, silver or the like, and the like may be used. In addition, micro-unevenness may be formed on the surface to strengthen binding force of the positive electrode active material, and the positive electrode current collector may be used in various forms such as films, sheets, foil, nets, porous bodies, foams and non-woven fabrics.

The positive electrode active material is a compound capable of reversibly intercalating and deintercalating lithium, and may specifically include a lithium metal oxide including lithium and one or more types of metals such as cobalt, manganese, nickel or aluminum.

More specifically, the lithium metal oxide may be a lithium-manganese-based oxide (for example, LiMnO₂, LiMn₂O₄ or the like), a lithium-cobalt-based oxide (for example, LiCoO₂ or the like), a lithium-nickel-based oxide (for example, LiNiO₂ or the like), a lithium-nickel-manganese-based oxide (for example, LiNi_{1-Y}MnYO₂ (herein, 0<Y<1), LiMn_{2-z}Ni_{z}O₄ (herein, 0<Z<2) or the like), a lithium-nickel-cobalt-based oxide (for example, LiNi_{1-Y1}Co_{Y1}O₂ (herein, 0<Y1<1) or the like), a lithium-manganese-cobalt-based oxide (for example, LiCo_{1-Y2}Mn_{Y2}O₂ (herein, 0<Y2<1), LiMn_{2-z}1Co_{z1}O₄ (herein, 0<Z1<2) or the like), a lithium-nickel-manganese-cobalt-based oxide (for example, Li(NiₚCo_{q}Mnᵣ₁)O₂ (herein, 0<p<1, 0<q<1, 0<r1<1, p+q+r1=1) or Li(Niₚ₁Co_{q1}Mnᵣ₂)O₄ (herein, 0<p1<2, 0<q1<2, 0<r2<2, p1+q1+r2=2) or the like), or a lithium-nickel-cobalt-transition metal (M) oxide (for example, Li(Niₚ₂Co_{q2}Mnᵣ₃MS₂)O₂ (herein, M is selected from the group consisting of Al, Fe, V, Cr, Ti, Ta, Mg and Mo, and p2, q2, r3 and s2 are each an atomic fraction of independent elements and 0<p2<1, 0<q2<1, 0<r3<1, 0<s2<1, p2+q2+r3+s2=1) or the like) or the like, and any one, or two or more compounds thereof may be included.

As the lithium metal oxide, LiCoO₂, LiMnO₂, LiNiO₂, lithium nickel manganese cobalt oxide (for example, Li(Ni_{1/3}Mn_{1/3}Co_{1/3})O₂, Li(Ni_{0.6}Mn0₂CoO₂)O₂, Li(Ni_{0.5}Mn_{0.3}CoO₂)O₂, Li(Ni0₇MnO₁₅Co_{0.15})O₂, Li(Ni_{0.8}Mn_{0.1}Co_{0.1})O₂ and the like), lithium nickel cobalt aluminum oxide (for example, Li(Ni_{0.8}Co_{0.15}Al_{0.05})O₂ and the like) and the like are more preferred in terms of increasing capacity properties and stability of the battery.

As the lithium composite metal oxide, Li(Ni_{0.6}Mn_{0.2}CoO₂)O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂ and the like are more preferred in terms of having an excellent improvement effect resulting from the control of type and content ratio of constituent elements forming the lithium composite metal oxide.

The positive electrode active material may be included in an amount of 60% by weight to 99% by weight, preferably 70% by weight to 99% by weight and more preferably 80% by weight to 98% by weight based on the total solid content weight excluding the solvent in the slurry for a positive electrode.

The binder is a component that helps with binding between the conductor, the active material and the current collector. Examples of such a binder may include polyvinylidene fluoride, polyvinyl alcohol, carboxymethyl cellulose, starch, hydroxypropyl cellulose, regenerated cellulose, polyvinyl pyrrolidone, tetrafluoroethylene, polyethylene, polypropylene, an ethylene-propylene-diene monomer, a sulfonated ethylene-propylene-diene monomer, styrene-butadiene rubber, fluoro rubber, various copolymers thereof and the like.

Typically, the binder may be included in an amount of 1% by weight to 20% by weight, preferably 1% by weight to 15% by weight and more preferably 1% by weight to 10% by weight based on the total solid content weight excluding the solvent in the slurry for a positive electrode.

The conductor is a component for further improving conductivity of the positive electrode active material.

The conductor is not particularly limited as long as it has conductivity without inducing chemical changes to the corresponding battery, and, for example, graphite; carbon-based materials such as carbon black, acetylene black, ketjen black, channel black, furnace black, lamp black or thermal black; conductive fibers such as carbon fiber or metal fiber; fluorocarbon, aluminum, metal powder such as nickel powder; conductive whiskers such as zinc oxide or potassium titanate; conductive metal oxides such as titanium oxide; conductive materials such as polyphenylene derivatives, and the like may be used.

Typically, the conductor may be included in an amount of 1% by weight to 20% by weight, preferably 1% by weight to 15% by weight and more preferably 1% by weight to 10% by weight based on the total solid content weight excluding the solvent in the slurry for a positive electrode.

The solvent may include an organic solvent such as NMP (N-methyl-2-pyrrolidone), and may be used in an amount that provides desirable viscosity when including the positive electrode active material, and optionally the binder, the conductor and the like. For example, the solvent may be included so that the concentration of the solid content including the positive electrode active material, and optionally the binder and the conductor is 50% by weight to 95% by weight, preferably 70% by weight to 95% by weight and more preferably 70% by weight to 90% by weight.

The negative electrode may be prepared by, for example, coating a slurry for a negative electrode including a negative electrode active material, a binder, a conductor, a solvent and the like on a negative electrode current collector. Alternatively, a graphite electrode made of carbon (C), or a metal itself may be used as the negative electrode.

For example, when the negative electrode is prepared by coating a slurry for a negative electrode on the negative electrode current collector, the negative electrode current collector generally has a thickness of 3 µm to 500 µm. Such a negative electrode current collector is not particularly limited as long as it has high conductivity without inducing chemical changes to the corresponding battery, and for example, copper, stainless steel, aluminum, nickel, titanium, baked carbon, or copper or stainless steel of which surface is treated with carbon, nickel, titanium, silver or the like, an aluminum-cadmium alloy and the like may be used. In addition, like the positive electrode current collector, micro-unevenness may be formed on the surface to strengthen binding force of the negative electrode active material, and the negative electrode current collector may be used in various forms such as films, sheets, foil, nets, porous bodies, foams and non-woven fabrics.

The negative electrode active material may include one, or two or more types of negative electrode active materials selected from the group consisting of natural graphite, artificial graphite, carbonaceous materials; lithium-containing titanium composite oxides (LTO), Si, SiOx, Sn, Li, Zn, Mg, Cd, Ce, Ni or Fe metals (Me); alloys formed with the metals (Me); oxides (MeOx) of the metals (Me); and composites of the metals (Me) and carbon. Specifically, as the negative electrode active material, siliconbased negative electrode active materials including silicon (Si), silicon oxide (SiOx), a silicon alloy or the like may be used. In this case, a thin and stable SEI layer including a siloxane bond is formed, further improving high temperature stability and lifetime properties of the battery.

The negative electrode active material may be included in an amount of 60% by weight to 99% by weight, preferably 70% by weight to 99% by weight and more preferably 80% by weight to 98% by weight based on the total solid content weight excluding the solvent in the slurry for a negative electrode.

The binder is a component that helps with binding between the conductor, the active material and the current collector. Examples of such a binder may include polyvinylidene fluoride, polyvinyl alcohol, carboxymethyl cellulose, starch, hydroxypropyl cellulose, regenerated cellulose, polyvinyl pyrrolidone, tetrafluoroethylene, polyethylene, polypropylene, an ethylene-propylene-diene monomer, a sulfonated ethylene-propylene-diene monomer, styrene-butadiene rubber, fluoro rubber, various copolymers thereof and the like.

Typically, the binder may be included in an amount of 1% by weight to 20% by weight, preferably 1% by weight to 15% by weight and more preferably 1% by weight to 10% by weight based on the total solid content weight excluding the solvent in the slurry for a negative electrode.

The conductor is a component for further improving conductivity of the negative electrode active material. Such a conductor is not particularly limited as long as it has conductivity without inducing chemical changes to the corresponding battery, and, for example, graphite such as natural graphite or artificial graphite; carbon black such as acetylene black, ketjen black, channel black, furnace black, lamp black or thermal black; conductive fibers such as carbon fiber or metal fiber; fluorocarbon, aluminum, metal powder such as nickel powder; conductive whiskers such as zinc oxide or potassium titanate; conductive metal oxides such as titanium oxide; conductive materials such as polyphenylene derivatives, and the like may be used.

The conductor may be included in an amount of 1% by weight to 20% by weight, preferably 1% by weight to 15% by weight and more preferably 1% by weight to 10% by weight based on the total solid content weight excluding the solvent in the slurry for a negative electrode.

The solvent may include water or an organic solvent such as NMP (N-methyl-2-pyrrolidone), and may be used in an amount that provides desirable viscosity when including the negative electrode active material, and optionally the binder, the conductor and the like. For example, the solvent may be included so that the concentration of the solid content including the negative electrode active material, and optionally the binder and the conductor is 50% by weight to 95% by weight, and preferably 70% by weight to 90% by weight.

When a metal itself is used as the negative electrode, the negative electrode may be prepared using a method of physically bonding, rolling or depositing a metal on a metal thin film itself or the negative electrode current collector. As the method of deposition, an electrical deposition method or a chemical vapor deposition method of the metal may be used.

For example, the metal bonded/rolled/deposited on the metal thin film itself or the negative electrode current collector may include one type of metal selected from the group consisting of lithium (Li), nickel (Ni), tin (Sn), copper (Cu) and indium (In), an ally of two or more types of the metals, or the like.

The method for manufacturing the all-solid-state battery having the above-described configuration is not particularly limited in the present disclosure, and known methods may be used.

When manufacturing the all-solid-state battery of the present disclosure, electrodes including the positive electrode and the negative electrode are disposed, and then press molded to assemble the battery.

The assembled battery is installed in an outer material, and then sealed by hot pressing and the like. As the outer material, laminate packs of aluminum, stainless and the like, cylindrical or prismatic containers made of metals are very appropriate.

As described above, the all-solid-state battery according to the present disclosure stably exhibits excellent discharge capacity, output properties and capacity retention rate, and therefore, is useful in the fields of portable devices such as mobile phones, notebook computers and digital cameras, and electric vehicles such as hybrid electric vehicles (HEV).

### PREFERRED MODE FOR CARRYING OUT THE INVENTION

### [Example]

Hereinafter, the present disclosure will be described in more detail with reference to examples. However, the scope of the present disclosure is not limited to these examples.

### [Preparation Example]

As raw material powder, Li₂S powder, P₂S₅ powder and LiCl powder were used. These powders were weighed so as to have a composition of Li₆PS₅Cl and a total weight of 3 g.

To a 45 ml ZrO₂ (zirconia) container, 30 g of a ZrO₂ ball (zirconia ball) having a diameter of 5 mm and 30 g of a ZrO₂ ball having a diameter of 10 mm were introduced. Planetary ball milling was performed at 400 rpm for 8 hours using a high energy ball milling device (Fritsch, Pulverisette 7). After that, heat treatment was performed at 550°C for 12 hours to obtain Li₆PS₅Cl, an Argyrodite-type solid electrolyte.

### [Example 1]

Li₆PS₅Cl prepared in the Preparation Example and anisole as an organic solvent were introduced to prepare a slurry having a concentration of 10% by weight, and wet grinding was performed at 300 rpm for 1 hour using a planetary ball mill (zirconia, diameter 10 mm) device. Then, the result was filtered and then dried to manufacture a sulfide-based solid electrolyte.

### [Comparative Example 1]

Li₆PS₅Cl prepared in the Preparation Example and toluene as an organic solvent were introduced to prepare a slurry having a concentration of 10% by weight, and wet grinding was performed at 50 rpm for 3 hours using a planetary ball mill (zirconia, diameter 10 mm) device. Then, the result was filtered and then dried to manufacture a sulfide-based solid electrolyte.

### [Comparative Example 2]

Li₆PS₅Cl prepared in the Preparation Example and dibutyl ether as an organic solvent were introduced to prepare a slurry having a concentration of 10% by weight, and wet grinding was performed at 50 rpm for 3 hours using a planetary ball mill (zirconia, diameter 10 mm) device. Then, the result was filtered and then dried to manufacture a sulfide-based solid electrolyte.

### [Comparative Example 3]

Li₆PS₅Cl prepared in the Preparation Example and hexane as an organic solvent were introduced to prepare a slurry having a concentration of 10% by weight, and wet grinding was performed at 300 rpm for 1 hour using a planetary ball mill (zirconia, diameter 10 mm) device. Then, the result was filtered and then dried to manufacture a sulfide-based solid electrolyte.

### [Comparative Example 4]

A sulfide-based solid electrolyte was manufactured using a dry grinding method without using an organic solvent. For Li₆PS₅Cl prepared in the Preparation Example, wet grinding was performed at 300 rpm for 1.5 hours using a planetary ball mill (zirconia, diameter 10 mm) device.

### [Test Example 1]

For each of the sulfide-based solid electrolytes obtained in the Example and the Comparative Examples, a ¹H-NMR spectrum was measured using a nuclear magnetic resonance (¹H-NMR) analysis device. A Bruker 400 MHz solid state NMR device was used for the analysis, and 4 mm-MAS was used as the probe. The spectrum was measured using a MAS NMR method at a 10 kHz spinning rate.

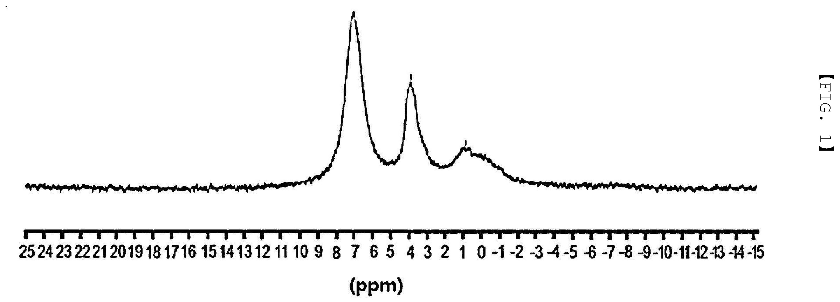

FIG. 1 shows the ¹H-NMR spectrum of the sulfide-based solid electrolyte of Example 1, and peaks were identified in a range of 7.0 ppm or greater and 8.5 ppm or less and a range of 3.5 ppm or greater and 4.5 ppm or less.

In addition, in the sulfide-based solid electrolyte of Comparative Example 1, peaks were identified at 6.98 ppm and 2.06 ppm, and in the sulfide-based solid electrolyte of Comparative Example 2, peaks were identified at 0 ppm to 5.0 ppm or less. Such differences in the peaks are due to the residual solvent.

### [Test Example 2]

Properties of each of the sulfide-based solid electrolytes obtained in the Example and the Comparative Examples were analyzed, and the results are shown in the following Table 1.

### [Analysis Method]

- Ion conductivity: 0.25 g of each powder was introduced to a mold having a diameter of Φ 16 mm, and pressurized with a force of 3700 Kg/cm² using a hydraulic press machine to prepare a pellet, and after that, ion conductivity was measured using an alternating current impedance evaluation method
- Particle size and particle size distribution: particle size and particle size distribution were measured using a laser diffraction scattering-type particle size distribution analyzer (model name: Partica LA-960V2, manufacturer: HORIBA)
- Specific surface area: specific surface area was measured using a BET (Brunauer-Emmett-Teller) measurement method that uses BELSORP (BET device) manufactured by BEL JAPAN using adsorption gas such as nitrogen

**[Table 1]**

| | Ion Conductivity (25°C) | Particle Size (D50) | (D90-D10) /D50 | Specific Surface Area |
|---|---|---|---|---|
| Example 1 | 8.44 mS/cm | 3.3 µm | 2.45 | 3.6 m²/g |
| Comparative Example 3 | 5.99 mS/cm | 3.5 µm | 2.01 | 6.7 m²/g |
| Comparative Example 4 | 6.10 mS/cm | 2.8 µm | 3.50 | 8.3 m²/g |

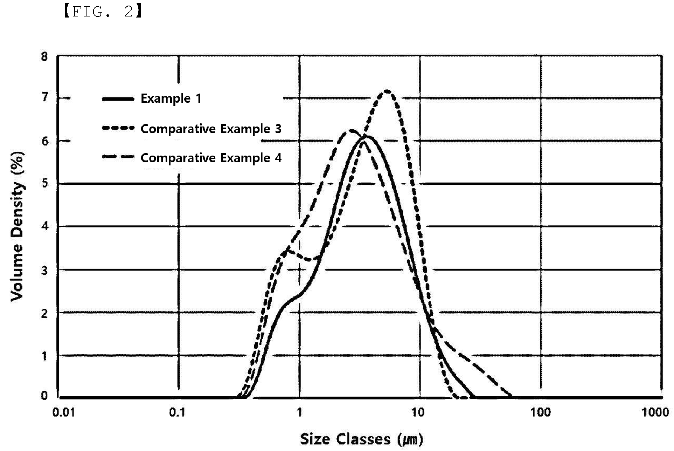

FIG. 2 is a diagram showing particle size distributions (PSD) of the sulfide-based solid electrolyte particles of Example 1, Comparative Example 3 and Comparative Example 4. The solid electrolyte of Example 1 showed a narrow particle size distribution, and the solid electrolytes of Comparative Example 3 and Comparative Example 4 showed wider particle size distributions compared thereto.

As seen from the results of Table 1 and FIG. 2, the sulfide-based solid electrolyte of Example 1 using wet grinding had a narrow particle size distribution, and was able to secure a high level of ion conductivity compared to the electrolytes of Comparative Examples 3 and 4.

Specifically, the sulfide-based solid electrolyte of Comparative Example 3 using hexane, a nonpolar solvent, had an average particle size (D50) similar to the electrolyte of Example 1, but showed a wide particle size distribution. This means an increase in the specific surface area, which resulted in a decrease in the ion conductivity.

In addition, the sulfide-based solid electrolyte of Comparative Example 4 using a dry grinding method had a small average particle size, but showed a relatively wide particle size distribution. As a result, the sulfide-based solid electrolyte of Comparative Example 4 exhibited a decrease in the ion conductivity along with an increase in the specific surface area.

## Claims

1. A sulfide-based solid electrolyte comprising:
a lithium (Li) element; and
a sulfur (S) element,
wherein, in a spectrum obtained by ¹H-NMR measurement performed on the solid electrolyte, at least one peak in a chemical shift range of 7.0 ppm or greater and 8.5 ppm or less and at least one peak in a chemical shift range of 3.5 ppm or greater and 4.5 ppm or less are observed.

2. The sulfide-based solid electrolyte of claim 1, which has an Argyrodite-type crystal structure.

3. The sulfide-based solid electrolyte of claim 1, which has ion conductivity of 6.50 mS/cm or greater at 25°C.

4. The sulfide-based solid electrolyte of claim 1, which has an average particle size (D50), which is measured using a laser diffraction scattering-type particle size distribution measurement method, of 1 µm to 10 µm.

5. The sulfide-based solid electrolyte of claim 1, which has a specific surface area, which is measured using a BET method, of 6.0 m²/g or less.

6. The sulfide-based solid electrolyte of claim 1, further comprising a phosphorus (P) element.

7. The sulfide-based solid electrolyte of claim 1, further comprising a halogen element.

8. A method for manufacturing a sulfide-based solid electrolyte, the method comprising:
preparing a slurry by mixing sulfide-based solid electrolyte particles including a lithium (Li) element and a sulfur (S) element, and an aromatic organic solvent; and
wet grinding the slurry,
wherein the aromatic organic solvent is at least one selected from the group consisting of an aromatic hydrocarbon substituted with three or more alkyl groups; an aromatic hydrocarbon substituted with one or more alkoxy groups; an aromatic ketone; an aromatic chlorinated hydrocarbon; an aromatic ester; and an aromatic acetate.

9. The method of claim 8, wherein the aromatic organic solvent is at least one selected from the group consisting of 1,2,4-trimethylbenzene, tetramethylbenzene, anisole, dimethoxybenzene, ethyl benzoate and benzyl acetate.

10. The method of claim 8, wherein the aromatic organic solvent has a boiling point of 150°C or higher and 250°C or lower.

11. An all-solid-state battery comprising:
a positive electrode;
a negative electrode; and
a solid electrolyte layer interposed between the positive electrode and the negative electrode,
wherein the solid electrolyte layer includes the sulfide-based solid electrolyte of any one of claims 1 to 7.
